# EUROPEAN PATENT APPLICATION

(11) **EP 2 724 923 A1**
(43) Date of publication of application: **30.04.2014**
(21) Application number: 12802636.6
(22) Date of filing: 09.04.2012
(51) Int. Cl.: B62K 15/00

(54) **FOLDING BICYCLE FRAME**

(30) Priority: 23.06.2011 CN 201120228813 U
(71) Applicant: Dahon Technologies, Ltd., Shenzhen, Guangdong 518125 (CN)
(72) Inventor: CAI, Jianjun, Shenzhen Guangdong 518125 (CN); HON, David, Tak-Wei, Shenzhen Guangdong 518125 (CN); WU, Jianhua, Shenzhen Guangdong 518125 (CN); CHENG, Shujun, Shenzhen Guangdong 518125 (CN)
(74) Representative: Grünecker, Kinkeldey, Stockmair & Schwanhäusser
(86) International application number: PCT/CN2012/073633
(87) International publication number: WO 2012/174921

(57) **Abstract**

A folding bicycle frame comprises a fordable front segment and a foldable rear segment. The front segment is a front arm (2), and the rear segment is an intermediate arm (3). A rear end of the front arm (2) and a front end of the intermediate arm (3) are hinged together at one side; a locking device (1) is provided at the other side. The locking device (1) comprises a handle (11) and a fixing rod (15), and the handle (11) is hinged on a fixing shaft (16) provided on one segment of the folding bicycle frame and protrudes from the folding bicycle frame; the handle (11) is provided with a mandrill (17), and a front end of the mandrill (17) can resist against the fixing rod (15) provided on the other segment of the frame and the fixing rod (15) is parallel to the fixing shaft (16). The folding bicycle frame of the present invention more complies with user's habit, is convenient to operate and simple in structure; the locking device (1) will not interfere with the chain wheel, which is more practicable.

## Description

### TECHNICAL FIELD

The present invention relates to a folding bicycle frame applied to a folding bicycle or an electric-assist bicycle.

### BACKGROUND OF THE INVENTION

Bicycles are very popular with customers in China because they help health-building and they are environmentally friendly. In recent years, folding bicycles have been pursued by people because they are little space-occupying and convenient for carrying. The folding bicycle frame is the main part of a folding bicycle, a folding device is an important component of the folding bicycle frame, and especially, different effects may be produced when a folding joint is applied in different bicycle frames. Chinese Patent No.200820146783.4 discloses a folding device for a bicycle, wherein a handle connecting with a front edge of the folding device is provided with a top rod, one end of the top rod is fixed on a top rod fixing shaft on the handle, and the other end of the top rod is connected with a roller spindle, said roller spindle can be pressed to fit into two projecting lugs of the front edge of the folding device. If the handle of the folding device is installed on the side of the bicycle frame, on which a chain wheel is provided, and when the distance between the five-way pipe and the folding device is so short that the chain wheel hinders the handle, the folding device will be inconvenient to use.

### SUMMARY OF THE INVENTION

The present invention aims at providing a new folding bicycle frame, which is convenient to operate and can prevent the interference of the chain wheel and the locking device.

The object of the present invention is achieved by the following technical scheme:
A folding bicycle frame comprises a foldable front segment and a foldable rear segment; a rear end of a front arm and a front end of an intermediate arm are hinged together at one side; a locking device is provided at the other side; the locking device comprises a handle and a fixing rod, the handle is hinged on a fixing shaft provided on one segment of the folding bicycle frame, the fixing shaft protrudes from the folding bicycle frame; the handle is provided with a mandrill, and a front end of the mandrill can resist against the fixing rod provided on the other segment of the folding bicycle frame, the fixing rod is parallel to the fixing shaft.

An end of the fixing shaft is provided with a locking slot, which accommodates a flat spring, and the fixing shaft fixes the handle through the flat spring.

A torsion spring is provided on the fixing shaft, and the torsion spring is located at a position where the handle and the fixing shaft are hinged.

The fixing shaft and the fixing rod are perpendicular to a datum center plane of the folding bicycle frame; and a surface of revolution, where the handle lies, is parallel to the datum center plane of the folding bicycle frame.

A fixing part is provided on the handle, and the mandrill is adjustably disposed on the fixing part.

The fixing part is a mandrill fixing cap with an inner screw hole, and the mandrill is provided with external threads to engage with the mandrill fixing cap.

The fixing part is a mandrill fixing axle with a screw hole.

The handle is provided with two lateral plates; one of the lateral plates is near a surface of the folding bicycle frame and is provided with an indentation; the other lateral plate is far from the surface of the folding bicycle frame; and the two lateral plates are respectively provided with a through hole for accommodating the fixing shaft; and the fixing part is provided between the two lateral plates.

The indentation is arcuate in shape.

A protruding step is provided either on the front arm or on the intermediate arm; an outer surface of one end of the lateral plate, where the through hole is provided, engages with the protruding step; the outer surface of said end of the lateral plate is provided with an arcuate protuberance; and the protuberance and the step together limit the handle.

According to the folding bicycle frame of the present invention, the locking device can be locked or unlocked through rotating the handle up or down, which more complies with user's habit, is convenient to operate and is simple in structure. In the folding bicycle frame of the present invention, even if the chain wheel and the handle of the locking device overlap in a longitudinal direction of the folding bicycle frame, the operation of the locking device will not be affected.

### BRIEF DESCRIPTION OF THE DRAWINGS

Fig. 1 is a schematic view of the folding bicycle frame of the present invention;
Fig. 2 is a schematic view illustrating the state of the handle when the folding bicycle frame of the present invention is locked;
Fig.3 is a schematic view illustrating the state of the handle when the folding bicycle frame of the present invention is unlocked;
Fig.4 is a stereogram of the folding bicycle frame of the present invention when the folding bicycle frame is unlocked;
Fig.5 is a partial enlarged view of the folding bicycle frame of the present invention when the folding bicycle frame is unlocked;
Fig.6 is a stereogram of the folding bicycle frame of the present invention when the folding bicycle frame is locked;
Fig.7 is a partial enlarged view of the folding bicycle frame of the present invention when the folding bicycle frame is locked;
Fig. 8 is a stereogram of an example of the handle of the folding bicycle frame of the present invention;
Fig. 9 is a stereogram of another example of the handle of the folding bicycle frame of the present invention;
Fig. 10 is an assembly drawing of the handle and the fixing shaft of the folding bicycle frame of the present invention.

### DETAILED DESCRIPTION OF THE PREFERRED EMBODIMENTS

The present invention will be described in conjunction with the drawings.

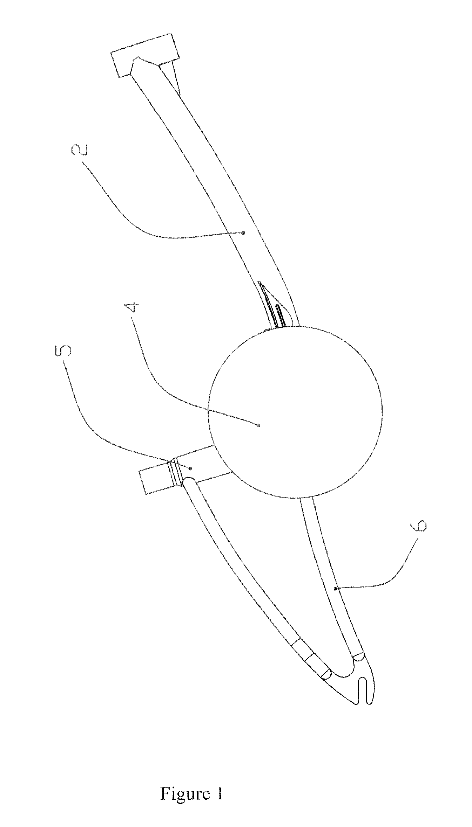

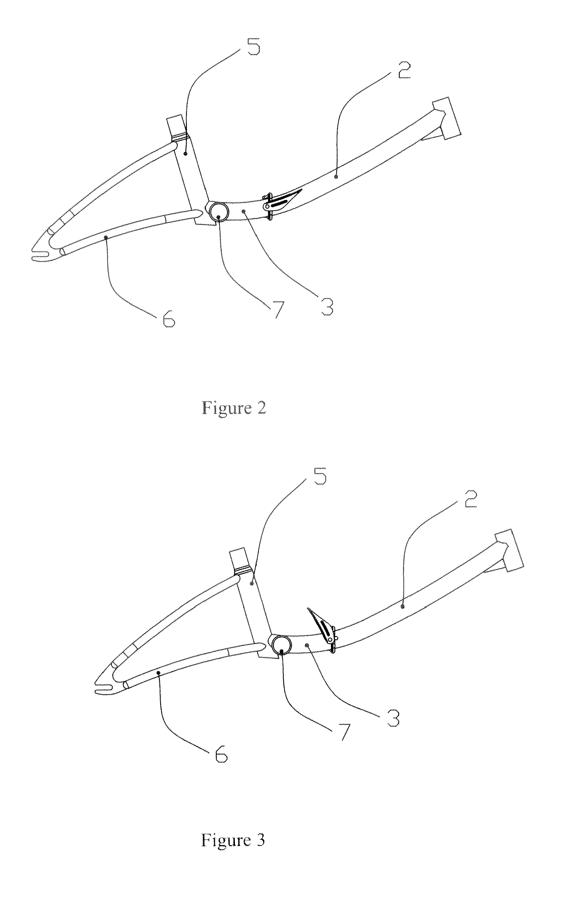

As shown in Figures 1-3, a folding bicycle frame comprises a front segment and a rear segment, and specifically comprises a front arm 2, an intermediate arm 3, a seat tube 5, a five-way pipe 7, a rear fork 6 and a locking device 1. The intermediate arm 3 and the rear fork 6 are respectively connected with the seat tube 5. Figure 2 illustrates the state when the folding bicycle frame is locked, and Figure 3 illustrates the state when the folding bicycle frame is unlocked.

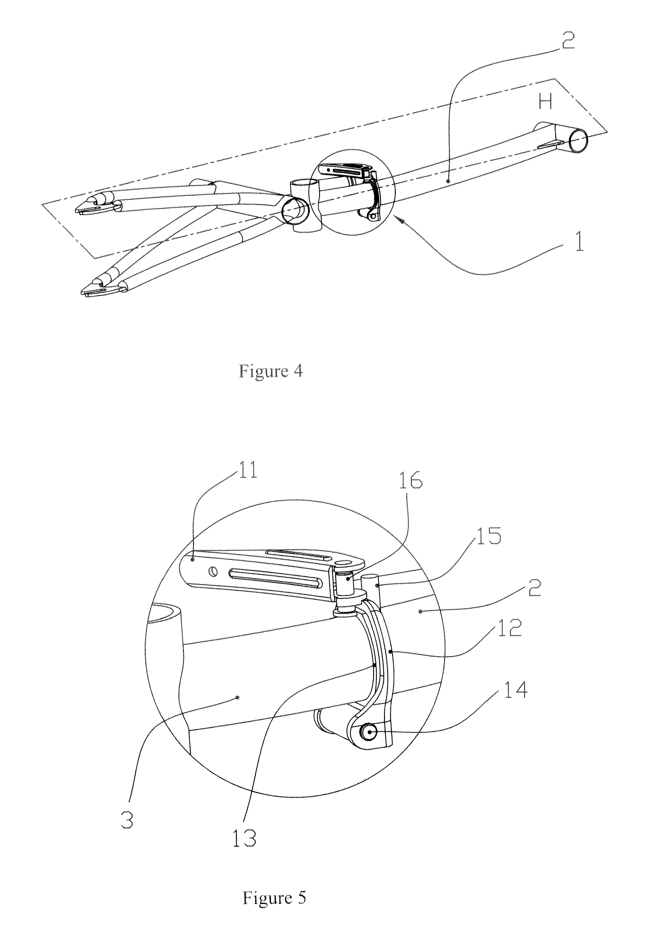

The rear end of the front arm 2 and the front end of the intermediate arm 3 are pivotally connected at one side, and the locking device I is provided at the other side. The locking device includes a handle 11 and a fixing rod 15, which are respectively disposed on two segments of the folding bicycle frame, i.e. the front arm 2 and the intermediate arm 3. If the handle 11 is provided on the front arm 2, then the fixing rod 15 is provided on the intermediate arm 3; alternatively if the handle 11 is provided on the intermediate arm 3, then the fixing rod 15 is provided on the front arm 2. Thus the handle 11 and the fixing rod 15 are respectively disposed on different segments of the folding bicycle frame. As shown in Figs. 4-7, the intermediate arm 3 is provided with a fixing shaft 16, which is protruded from the intermediate arm 3 of the bicycle frame. The handle 11 is pivotally provided on the intermediate arm 3 through the fixing shaft 16. The front arm 2 is provided with the fixing rod 15, which is parallel to the fixing shaft 16. Preferably, the fixing shaft 16 and the fixing rod 15 are perpendicular to a datum center plane H of the folding bicycle frame, and a surface of revolution where the handle 11 lies is parallel to the datum center plane H of the folding bicycle frame, i.e. parallel to a wheel plane of a chain wheel 4. As shown in Fig.1, when the chain wheel 4 is installed on the five-way pipe 7, even if the handle 11, which protrudes from the folding bicycle frame in a lateral direction of the folding bicycle frame, will overlap with the chain wheel 4 in a longitudinal direction of the folding bicycle frame due to the short distance between the five-way pipe 7 and the handle 11, the folding bicycle frame can still be locked or unlocked conveniently.

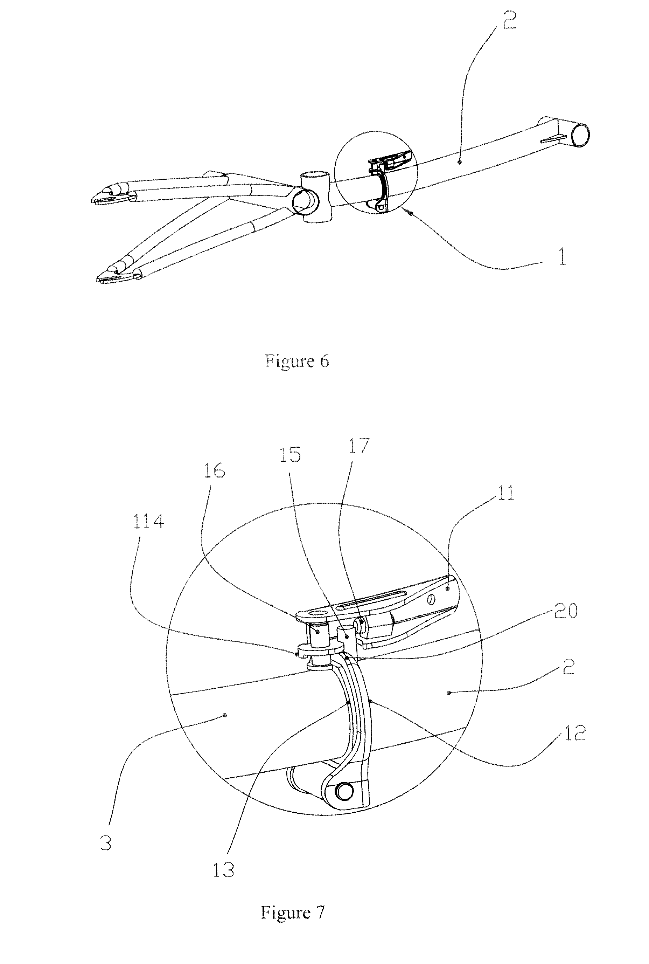

As shown in Figs. 6 and 7, the handle 11 is provided with a mandrill 17. When the handle 11 turns to a dead point, the mandrill 17 will press against the fixing rod 15. Namely, when central lines of the fixing shaft 16, the fixing rod 15 and the mandrill 17 lie in the same plane, the folding bicycle frame is locked tightly, and the handle 11 is not easy to rotate due to a frictional force between the fixing rod 15 and the mandrill 17.

As shown in Figs. 4 and 5, when the handle 11 is rotated to make the mandrill 17 released from the fixing rod 15, the front arm 2 and the intermediate arm 3 can be rotated relatively and the folding bicycle frame can be folded.

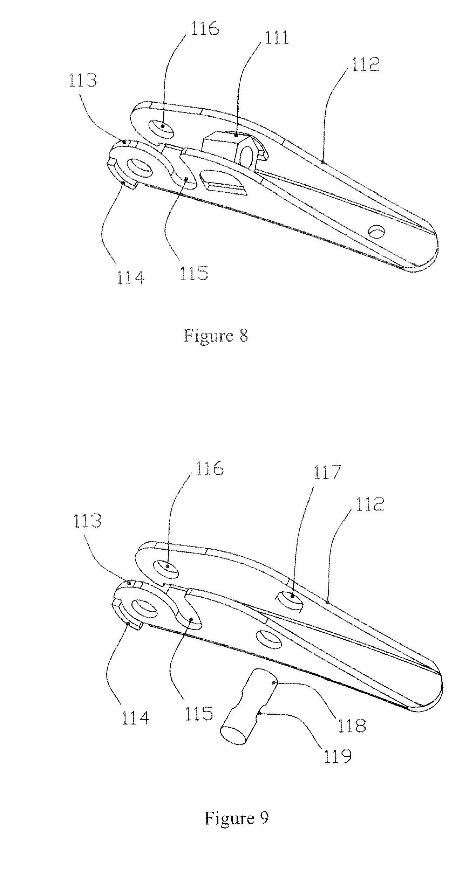

As shown in Figs. 8 and 9, two sides of the handle 11 are provided with lateral plates 112, 113. The lateral plate 113 is near a surface of the folding bicycle frame, and the lateral plate 112 is far from the surface of the folding bicycle frame. The lateral plates 112, 113 are respectively provided with a through hole 116, and the fixing shaft 16 goes through the through holes 116 of the lateral plates 112,113. An end of the fixing shaft 16 is provided with a locking slot, which accommodates a flat spring 19, so as to fix the handle 11. A fixing part is provided between the two lateral plates 112,113, and the mandrill 17 is provided on the fixing part. As shown in Fig. 8, the fixing part is a mandrill fixing cap 111 with an inner screw hole, and the mandrill 17 is provided with external threads. The level of difficulty for folding or unfolding the folding bicycle frame, and the degree of locking or unlocking the folding bicycle frame can be adjusted through adjusting the position of the mandrill 17 in the mandrill fixing cap 111. Alternatively, as shown in Fig.9, the fixing part may be a mandrill fixing axle 118 with a screw hole 119, and the mandrill fixing axle 118 goes through connecting holes 117 of the handle 11 and is fixed in the handle 11. An arcuate indentation 115 is provided in the lateral plate 113. During the handle 11 is locking the folding bicycle frame, the fixing rod 15 goes along a curved edge of the arcuate indentation 115 and is accommodated in the arcuate indentation 115. An outer surface of the end of the lateral plate 113, where the through hole 116 is provided, engages with a step 20 protruding from the intermediate arm 3 or from the front arm 2. The engaging face in the outer surface is provided with an arcuate protuberance 114. When the handle is rotated clockwise or anti-clockwise, an end of the protuberance 114 resists against the step of the front arm 2 or the intermediate arm 3 so as to limit the handle 11. When the folding bicycle frame is locked, the handle 11 is located within its rotation range; when the folding bicycle frame is folded, even if the handle 11 has been rotated to its limit position, the handle 11 only needs to rotate for a small angle to unfold and lock the folding bicycle frame. When the folding bicycle frame is locked, the handle 11 is flush with the local part of the bicycle frame, so that the locking device is not easy to be released accidently.

In an improved technical scheme based on the technical scheme above, the front arm 2 and the media arm 3 are connected through a first folding body 12 and a second folding body 13. As shown in Figs. 4 -7, the first folding body is welded on the front arm 2, and the second folding body 13 is welded on the intermediate arm 3. The first folding body 12 and the second folding body 13 are hinged together through a hinge axle 14. The outer surface of the end of the lateral plate 113, where the through hole 116 is provided, engages with the first folding body 12 or the second folding body 13, and the end of the protuberance 114 resists against the first folding body 12 or the second folding body 13 so as to limit the handle 11.

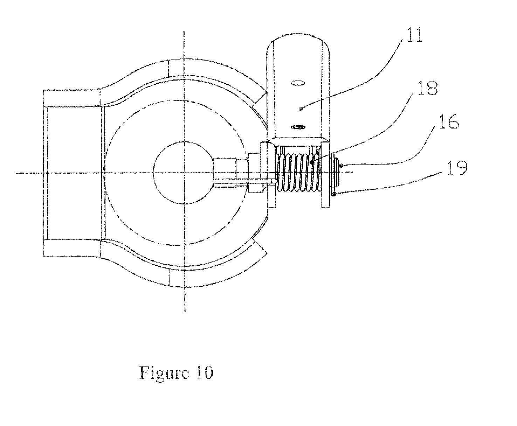

In order that the handle 11 offsets swiftly after the bicycle frame is unfolded, a torsion spring 18 is provided at the position where the handle 11 and the fixing shaft 16 are hinged, as shown in Fig.10. When the handle 11 is released, the torsional force of the torsion spring 18 forces the fixing rod 15 to release from the mandrill 17 swiftly, so that the bicycle frame can be folded quickly. The torsion spring 18 will not affect the reliability of the bicycle frame when the bicycle frame is locked. An end of the fixing shaft 16 is provided with a locking slot, which accommodates the flat spring 19. The flat spring 19 is disposed at an outer side of the handle 11 to make the handle 11 fixed on the fixing shaft 16.

The preferred embodiments described above are not restricted. It will be understood that various equivalent changes and replacements may be made based on the structure, features and principle of the present invention without departing from the scope of the invention.

## Claims

1. A folding bicycle frame, comprising a foldable front segment and a foldable rear segment; wherein, a rear end of a front arm (2) and a front end of an intermediate arm (3) are hinged together at one side; a locking device (1) is provided at the other side; the locking device (1) comprises a handle (11) and a fixing rod (15), the handle (1) is hinged on a fixing shaft (16) provided on one segment of the folding bicycle frame, the fixing shaft (16) protrudes from the folding bicycle frame; the handle (11) is provided with a mandrill (17), and a front end of the mandrill (17) can resist against the fixing rod (15) provided on the other segment of the folding bicycle frame, the fixing rod (15) is parallel to the fixing shaft (16).

2. The folding bicycle frame according to claim 1, wherein, an end of the fixing shaft (16) is provided with a locking slot, which accommodates a flat spring (19), and the fixing shaft (16) fixes the handle (11) through the flat spring.

3. The folding bicycle frame according to claim 1, wherein, a torsion spring (18) is provided on the fixing shaft (16), and the torsion spring (16) is located at a position where the handle (11) and the fixing shaft (16) are hinged.

4. The folding bicycle frame according to claim 1, wherein, the fixing shaft (16) and the fixing rod (15) are perpendicular to a datum center plane (H) of the folding bicycle frame; and a surface of revolution, where the handle (11) lies, is parallel to the datum center plane (H) of the folding bicycle frame.

5. The folding bicycle frame according to claim 1, wherein, a fixing part is provided on the handle (11); and the mandrill (17) is adjustably disposed on the fixing part.

6. The folding bicycle frame according to claim 5, wherein, the fixing part is a mandrill fixing cap (111) with an inner screw hole, and the mandrill (17) is provided with external threads to engage with the mandrill fixing cap (111).

7. The folding bicycle frame according to claim 5, wherein, the fixing part is a mandrill fixing axle (118) with a screw hole (119).

8. The folding bicycle frame according to any one of claims 5-7, wherein, the handle (11) is provided with two lateral plates (112, 113); one of the lateral plates (113) is near a surface of the folding bicycle frame and is provided with an indentation (115); the other lateral plate (113) is far from the surface of the folding bicycle frame; and the two lateral plates (112, 113) are respectively provided with a through hole (116) for accommodating the fixing shaft (16); and the fixing part is provided between the two lateral plates (112, 113).

9. The folding bicycle frame according to claim 8, wherein, the indentation (115) is arcuate in shape.

10. The folding bicycle frame according to claim 8, wherein, a protruding step is provided either on the front arm (2) or on the intermediate arm (3); an outer surface of one end of the lateral plate (113), where the through hole (116) is provided, engages with the protruding step; the outer surface of said end of the lateral plate (113) is provided with an arcuate protuberance (114); and the protuberance (114) and the step together limit the handle (11).
